# EUROPEAN PATENT APPLICATION

(11) **EP 4 807 553 A1**
(43) Date of publication of application: **16.09.2026**
(21) Application number: 25382227.4
(22) Date of filing: 12.03.2025
(51) Int. Cl.: G06F 9/50

(54) **METHOD, ORCHESTRATOR AND COMPUTER PROGRAMS FOR WORKLOAD MANAGEMENT ACROSS CLOUD AND EDGE COMPUTING ENVIRONMENTS**

(71) Applicant: Telefonica Innovacion Digital SL, 28050 Madrid (ES)
(72) Inventor: Christofidi, Georgia, 28050 Madrid (ES); Omaña Iglesias, Jesus Alberto, 28050 Madrid (ES); Kourtellis, Nicolas, 28050 Madrid (ES); Alvarez Terribas, Francisco, 28050 Madrid (ES)
(74) Representative: Carlos Hernando, Borja

(57) **Abstract**

A method, orchestrator, and computer programs for workload management across cloud and edge computing environments are provided. The method comprises performing a microservice topology mapping and application-specific microservice dependencies profiling by analyzing how different microservices hosted on datacenters and/or edge centers interact and depend on each other; profiling and translating datacenter's and/or edge center's incoming application traffic data into resource utilization; estimating future incoming application traffic data patterns of the datacenters and/or edge centers; detecting anomalies in resource utilization or workload performance in the datacenters and/or edge centers; determining whether a workload should be migrated to another datacenter and/or edge center by performing a multi-objective customizable optimization process comprising executing a weighted scoring function on different metrics including resource utilization, carbon footprint reduction, latency minimization, cost efficiency and anomaly management.

## Description

### TECHNICAL FIELD

The present invention relates to a method, an orchestrator, and computer programs for workload management across cloud and edge computing environments.

### BACKGROUND OF THE INVENTION

Carbon-driven orchestration is becoming crucial in managing modern distributed computing infrastructures, especially as concerns about the environmental impact of cloud and edge computing grow. With the increasing deployment of datacenters in diverse geographical locations, carbon-aware strategies, such as spatial and temporal workload shifting, have emerged to optimize energy consumption. These techniques involve migrating workloads to datacenters powered by greener energy or scheduling non-urgent tasks during periods of lower carbon intensity. While effective at reducing emissions, these approaches must balance environmental goals with the operational costs and complexities of workload redistribution.

Resource-driven orchestration, on the other hand, emphasizes optimizing the allocation of computational workloads based on resource usage patterns, system performance, and quality-of-service (QoS) requirements. Anomaly detection and predictive modeling have been employed to forecast resource demands and detect unexpected deviations in usage, enabling preemptive management to mitigate disruptions. These strategies enhance resource efficiency and maintain system stability, but they often lack mechanisms to account for the environmental implications of their decisions.

Recent advances in computing, such as microservice applications and machine learning-driven workloads, have increased the need for fast, responsive computation near users, leading to the concept of the cloud-edge continuum. This approach integrates cloud and edge resources to deliver computing services, with edge computing enabling application deployment closer to end users to reduce latency and enhance real-time performance. However, the unique challenges of edge environments, such as limited resources, heterogeneous computational devices, and unreliable network connections, require new workload management approaches. Various resource orchestrators have been developed to manage workloads across the cloud-edge continuum, aiming to meet QoS requirements, such as latency, throughput, and availability. Specifically, Oakestra [1] and OneEdge [2] have been proposed as alternatives to Kubernetes for orchestration at the edge. Furthermore, Nautilus [3] and Intent-driven orchestration of serverless applications in the computing continuum [4] employ advanced scheduling, resource allocation, and future resource usage patterns prediction to optimize workload placement. Fighting the Fog of War [5] makes use of anomaly detection techniques to further enhance performance of cloud systems.

As the deployment of edge computing grows, so does its environmental impact, with distributed edge data centers consuming significant energy and contributing to carbon emissions. Unlike large cloud centers, these smaller data centers often lack energy-saving optimizations, like liquid cooling or location-based cooling, making carbon-conscious strategies essential. Recent carbon-aware solutions, such as spatial and temporal shifting, help reduce emissions by adjusting workloads based on the carbon intensity of electricity generation. CarbonScaler [6] leverages the elasticity of the workloads, using a greedy algorithm to temporally and spatially shift them, to minimize carbon emissions. Caribou [7] is a framework that offloads serverless workflows across geo-distributed regions to reduce the carbon footprint of serverless functions. Furthermore, the limitations of the temporal and spatial shifting for carbon optimization have also been studied [8]. The workload pausing and resuming opportunities have also been examined by previous works, leveraging temporal shifting for carbon efficiency [9].

In spite of these prior art solutions, there has not been yet any work that examines the complex interplay between resource availability, latency, and carbon intensity, providing insight into the inherent trade-offs when striving to optimize both carbon ad resource efficiency in cloud-edge environments. There is a plethora of orchestrators with an end goal of increasing resource efficiency in edge-cloud environments, but none includes carbon efficiency in their study. Resource efficiency and carbon reduction objectives often conflict, particularly in heterogeneous environments where edge data centers lack the energy efficiencies of centralized cloud facilities. Moreover, no studies have quantified the impact of anomalies in resource utilization or network performance on the carbon footprint of workloads.

Secondly, carbon-aware solutions often overlook that some organizations operate infrastructures where market dynamics are confined to a single region, and their services are exclusively tailored to clients within that same location. Finally, spatial and temporal shifting optimizations come with additional costs and deployment of resources across locations, which limits the effectiveness of their current resource orchestration solutions.

New orchestration methods and systems integrating carbon-driven and resource-driven strategies to deliver a unified solution for managing workloads across cloud and edge computing infrastructures are therefore needed.

### References:

[1] Bartolomeo, Giovanni, et al. "Oakestra: A lightweight hierarchical orchestration framework for edge computing." 2023 USENIX Annual Technical Conference (USENIX ATC 23). 2023.
[2] Saurez, Enrique, et al. "Oneedge: An efficient control plane for geo-distributed infrastructures." Proceedings of the ACM Symposium on Cloud Computing. 2021.
[3] Fu, Kaihua, et al. "Qos-aware and resource efficient microservice deployment in cloud-edge continuum." 2021 IEEE International Parallel and Distributed Processing Symposium (IPDPS). IEEE, 2021.
[4] Filinis, Nikos, et al. "Intent-driven orchestration of serverless applications in the computing continuum." Future Generation Computer Systems 154 (2024): 72-86.
[5] Li, Liqun, et al. "Fighting the fog of war: Automated incident detection for cloud systems." 2021 USENIX Annual Technical Conference (USENIXATC 21). 2021.
[6] Hanafy, Walid A., et al. "Carbonscaler: Leveraging cloud workload elasticity for optimizing carbon-efficiency." Proceedings of the ACM on Measurement and Analysis of Computing Systems 7.3 (2023): 1-28.
[7] Gsteiger, Viktor Urban, et al. "Caribou: Fine-Grained Geospatial Shifting of Serverless Applications for Sustainability." Proceedings of the ACM SIGOPS 30th Symposium on Operating Systems Principles. 2024.
[8] Sukprasert, Thanathorn, et al. "On the Limitations of Carbon-Aware Temporal and Spatial Workload Shifting in the Cloud." Proceedings of the Nineteenth European Conference on Computer Systems. 2024.
[9] Lechowicz, Adam, et al. "The online pause and resume problem: Optimal algorithms and an application to carbon-aware load shifting." Proceedings of the ACM on Measurement and Analysis of Computing Systems 7.3 (2023): 1-32.

### DESCRIPTION OF THE INVENTION

An object of the present invention is thus to provide a framework that, apart from reducing the operational carbon footprint, also makes resource-aware decisions and includes resource prediction and anomaly detection components.

To that end, the present invention provides, according to one aspect, a method for workload management across cloud and edge computing environments. The computing environments, either centralized or distributed, comprise a plurality of datacenters and/or edge centers. The method, which is particularly executed by an orchestrator, includes:
a) performing a microservice topology mapping and application-specific microservice dependencies profiling by analyzing how different microservices hosted on the datacenters and/or edge centers interact and depend on each other;
b) profiling and translating datacenter's and/or edge center's incoming application traffic data into resource utilization at both a microservice node level and a cluster node level;
c) estimating future incoming application traffic data patterns of the datacenters and/or edge centers by implementing at least one predictive model on historical resource usage data of the datacenters and/or edge centers;
d) detecting anomalies in resource utilization or workload performance in the datacenters and/or edge centers by comparing a current resource usage or incoming application traffic data against the estimated future incoming application traffic data patterns; and
e) determining whether a workload should be migrated to another datacenter and/or edge center by performing a multi-objective customizable optimization process comprising executing a weighted scoring function on different metrics including the resource utilization, a carbon footprint reduction, a latency minimization, a cost efficiency and an anomaly management accounting for a duration of anomalies versus a time it takes to make migration decisions and execute them.

In some embodiments, the weighted scoring function comprises normalizing all the different metrics to a [0,1] value range using a normalization function; calculating the scoring function for each of the datacenters and/or edge centers; and executing a decision criteria using the calculated scoring functions.

In some embodiments, the decision criteria comprises selecting the datacenter or edge center with a lowest scoring function for the migration.

In some embodiments, step a) comprises constructing a directed acyclic graph representing the interactions between the microservices, where each node in the constructed graph corresponds to a microservice and edges represent communication dependencies and frequency between them.

In some embodiments, the predictive model comprises a naive baseline model.

In some embodiments, the naive baseline model is tuned to a periodicity of the incoming application traffic data and/or to different applications and datacenters/edge centers that exhibit different periodic behaviors.

In some embodiments, in step d) the anomalies are detected using statistical rules and a Gaussian Mixture Model or a Boosted Tree.

In some embodiments, step e) is performed in real-time.

In some embodiments, the determining step further comprises using a greedy heuristic approach.

In some embodiments, step b) further comprises using a machine learning inference service that maps the datacenter's and/or edge center's incoming application traffic data to CPU, memory and/or GPU needs.

In some embodiments, step c) further comprises using external events including promotional campaigns and/or news events to estimate the future incoming application traffic data patterns.

Other embodiments of the invention that are disclosed herein also include a system and software programs to perform the method embodiment steps and operations summarized above and disclosed in detail below. More particularly, a computer program product is one embodiment that has a computer-readable medium including computer program instructions encoded thereon that when executed on at least one processor in a computer system causes the processor to perform the operations indicated herein as embodiments of the invention.

Consequently, the present invention provides a novel orchestration method and system that integrates carbon-driven and resource-driven strategies to deliver a unified solution for managing workloads across cloud and edge computing environments or infrastructures. The invention identifies anomalies and forecasts resource needs by combining localized and centralized anomaly detection with predictive resource modeling. It then employs a multi-criteria optimization function, which factors in carbon intensities, migration costs, network latencies, and QoS constraints, to determine the optimal workload placement. This hybrid approach enables intelligent, sustainable, and cost-efficient workload management, addressing both, environmental and operational, challenges in the cloud-edge continuum.

Some of the main advantages achieved by the present invention are:
- Comprehensive Optimization of Carbon and Resource Efficiency: Unlike existing solutions, the invention examines the complex interplay between resource availability, latency, cost, and carbon intensity, enabling simultaneous optimization of resource and carbon efficiency. This multi-objective optimization provides a significant advantage, especially in heterogeneous cloud-edge environments where these objectives often conflict. Furthermore, existing solutions typically overlook the anomalies in resource utilization and their impact on carbon footprint, across edge and cloud infrastructures.
- Relevance to Regional and Localized Workloads: Unlike solutions that assume global, multi-region infrastructure, this invention addresses the needs of organizations operating within a single region. It eliminates unnecessary costs and complexity associated with existing spatial and temporal shifting optimizations, providing a more effective and tailored solution for regionally focused applications.
- Flexibility and Adaptability: The framework's support for customizable policies offers flexibility to meet specific user and application requirements. This adaptability ensures that the orchestration framework can address diverse priorities, such as minimizing latency, reducing energy costs, or maximizing sustainability. No other tool to date provides such a level of configurability and responsiveness to diverse use cases.

### BRIEF DESCRIPTION OF THE DRAWINGS

The previous and other advantages and features will be more fully understood from the following detailed description of embodiments, with reference to the attached figures, which must be considered in an illustrative and non-limiting manner, in which:
Fig. 1 graphically illustrates the overall design of the proposed architecture, according to an embodiment.
Fig. 2 graphically illustrates an example of a microservices topology.

### DETAILED DESCRIPTION OF THE INVENTION AND OF PREFERRED EMBODIMENTS

An orchestrator is a system that automates the execution, scaling, and management of applications across diverse computing environments. In the context of the cloud-edge continuum, an orchestrator ensures that workloads and microservices are efficiently distributed across nodes, from centralized cloud datacenters to geographically dispersed edge devices. Its primary role is to abstract the complexity of managing resources in these highly dynamic and heterogeneous environments, enabling higher carbon and resource efficiency.

The challenges of orchestration in the cloud-edge continuum are significant. Unlike traditional cloud-only environments, edge nodes often have diverse hardware configurations, varying network conditions, and limited computational capacity. Additionally, edge-to-edge and edge-to-cloud communications frequently rely on unstable public networks, which can impact performance and introduce latency. Resource contention on nodes, high client mobility, and sudden workload surges further complicate the deployment of user-facing applications that require consistent and low-latency responses.

To address these complexities, this invention proposes an orchestrator that operates on top of a state-of-the-art orchestrator, e.g., Kubernetes, by leveraging its container orchestration capabilities while extending its functionality to suit the unique demands of edge environments.

The system continuously monitors the state of edge servers, adapting to resource availability without disrupting application performance. The present invention makes workload placement decisions, considering carbon intensity, network latency, and energy efficiency.

Particularly, the present invention combines local autonomy with centralized coordination, enabling rapid decision-making that affects individual edge and cloud nodes while monitoring the entire datacenter. The invention protects applications from performance degradation and increased carbon footprint that are caused by potential anomalies due to overly dynamic resource usage, which is a characteristic of edge nodes. By integrating these capabilities, it ensures efficient resource utilization, carbon efficiency, supports high availability, and maintains the end-to-end performance objectives critical for applications deployed across the cloud-edge continuum.

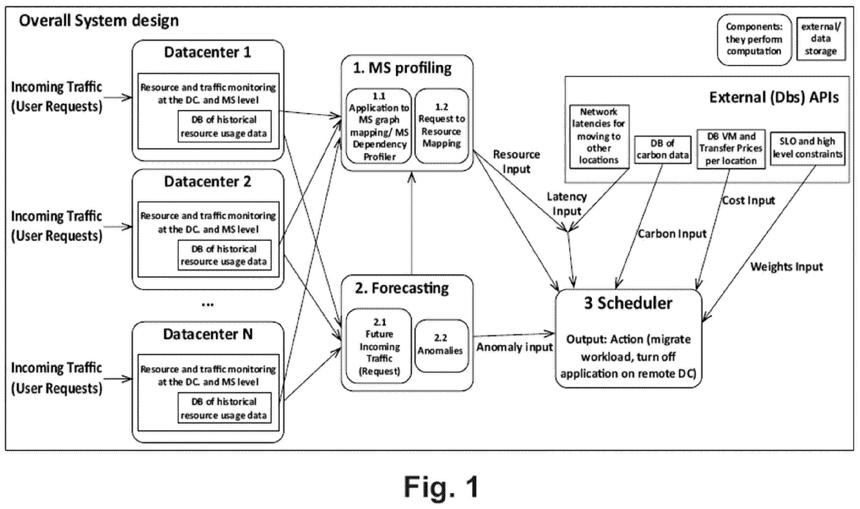

Fig. 1 illustrates an embodiment of the proposed solution for managing workload and microservices across distributed cloud-edge infrastructures. According to this embodiment, the invention comprises the following steps and components:
- (Component 1: MS Profiling):
   a. Microservice topology mapping and application-specific microservice dependencies profiling. This step involves analyzing how the different microservices services interact and depend on each other (Component 1.1).
   b. Translating incoming traffic to resource utilization. Profiling incoming traffic helps translate application demands into specific infrastructure needs (Component 1.2).
- (Component 2: Forecasting):
   a. Traffic forecasting. Using historical data and predictive models, the forecaster estimates future traffic patterns (Component 2.1).
   b. Anomaly detection. Leveraging historical and real-time data, this system component identifies resource contentions (e.g., sudden spikes in CPU or memory usage), that could cause performance degradation in the running applications (Component 2.2).
- (Component 3: Scheduler). This component evaluates whether a workload or service should be migrated and identifies an optimal location that ensures the application meets its performance requirements.

In the following, the different steps are further detailed.

### Microservice topology mapping and application-specific microservice dependencies profiling (Component 1.1)

In microservice-based applications, certain services have a high degree of communication and dependency, often forming tightly coupled structures. For example, a user authentication service might need to frequently communicate with session management or user profile services. To maintain low-latency communication and minimize network overhead, such microservices should ideally be placed on the same node or within proximity. However, effectively identifying and managing these dependencies requires a dedicated component capable of profiling application-specific microservice relationships and mapping their topology.

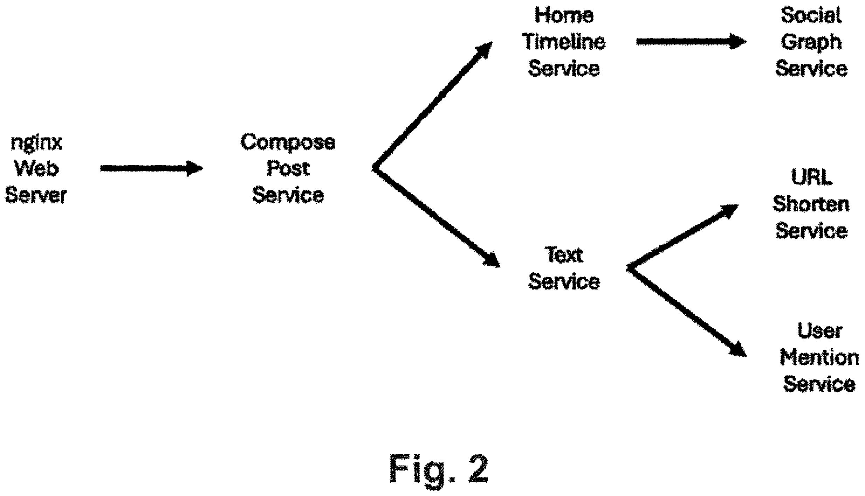

In some embodiments, this component 1.1 analyzes the application's microservice structure to construct a directed acyclic graph (DAG) that represents the interactions between microservices. Each node in the graph corresponds to a microservice, and the edges represent the communication dependencies and frequency between them. By profiling the requests submitted to the application, the component 1.1 can identify which microservices are activated together and the intensity of their communication. This component 1.1 can also store the information of frequently interacting microservices that enable application-specific intelligent microservice migration decisions. For instance, if a microservice on an edge node interacts heavily with another service, they should ideally be co-located to minimize latency from inter-node communication, unless factors, such as resource contention or high load, appear. In the example of Fig. 2, the Text Service should be collocated in the same node with the URL Shorten Service and the User Mention Service, since all the text-related requests, that use the Text Service, also will reach the URL Shorten Service and the User Mention Service. A practical rule of thumb is that if two microservices communicate more than 50% of the time for any given request, they should be collocated on the same server or node. This ensures minimal communication overhead and prevents unnecessary increases in application-wide latency.

Resource contention is another critical factor that this component must address. Placing multiple resource-intensive microservices on the same edge datacenter can lead to competition for shared resources, such as CPU, memory, and network bandwidth, potentially causing quality-of-service (QoS) violations. Overall, this component 1.1 stores application-specific information to guide the decisions of the system by the microservices profiles and topology to avoid splitting highly dependent microservices across nodes, which would introduce additional communication overhead.

### Translating incoming traffic to resource utilization (Component 1.2)

This component 1.2 is responsible for profiling and translating incoming application traffic into resource utilization at both the microservice node level and the broader cluster level. Each type of request activates specific microservices and imposes unique resource demands, such as CPU, memory, storage, and network bandwidth. For instance, in a social media application, a "Compose Post" request might require 10 MB of memory, a 10% increase in utilization on 2 CPU cores, and moderate network usage to process and store the post. By analyzing historical traffic and workload patterns, this component 1.2 can built a detailed profile of resource consumption for each type of request and its associated microservices. For example, it can store information that shows that a specific microservice consistently has high CPU utilization values and it usually becomes a bottleneck, when there is incoming traffic. On a cluster-wide level, this component 1.2 can aggregate resource profiles from individual nodes to create a global view of resource availability and utilization. By translating each incoming request to the specific microservices and nodes it activates, the system gains visibility into the current and projected resource demands across the cluster. This information is later used by the other connected components of the system, and it is critical for effectively maintaining performance under dynamic conditions, e.g., sudden traffic surges or unexpected resource contention.

### Traffic forecasting (Component 2.1)

The traffic forecasting component 2.1 enables the orchestrator to proactively adapt to changes in workload demand by predicting future incoming request patterns. In some embodiments, at its core, this forecaster 2.1 uses a lightweight model, which could be based on sophisticated or simple predictors such as the persistent forecast, often referred to as the "naive baseline". This model assumes that the workload at the next timestep will remain the same as in the current step. Mathematically, if *y(t)* represents the workload at time *t,* then the forecast for *y(t + 1)* is equal to *y(t).* While simple, this approach is both computationally efficient and effective in scenarios where workloads exhibit periodic or predictable patterns, which is often the case in cloud and edge systems.

The persistent forecaster 2.1 is particularly well-suited for edge environments due to its minimal computational overhead and storage requirements. This lightweight model can easily run at the edge without impacting other operations, making it ideal for geographically distributed systems with constrained resources. Additionally, the model can be tuned to the periodicity of incoming traffic, which varies by application and workload. For example, if historical data reveals weekly patterns in traffic demand, such as higher workloads on Mondays, the model will incorporate this periodicity to improve accuracy. In this case, the forecast assumes that the incoming workload on a given Monday will resemble the workload observed on the previous Monday.

The approach can also be fine-tuned for different applications and data centers, which may exhibit distinct periodic behaviors. For instance:
- Video streaming applications might experience daily peaks during evenings and weekends due to user leisure habits.
- E-commerce platforms might show periodic surges around specific times, such as weekends, holidays, or promotional events.
- Industrial loT systems could display traffic spikes aligned with factory shift schedules, which repeat consistently across days.

By tailoring the forecaster 2.1 to the specific periodicity of each workload, the component can provide precise predictions for future traffic, enabling the orchestrator to proactively make decisions. In summary, the future traffic forecasting component 2.1 leverages the simplicity and effectiveness of the persistent forecast model for individual applications and data centers. This enables the system to adapt dynamically and efficiently to changing resource demands while maintaining low computational overhead, even in resource-constrained edge environments.

### Anomaly detection (Component 2.2)

The anomaly detection component 2.2 is designed to monitor deviations from typical resource usage patterns and detect unexpected changes in workload behavior. This is critical for maintaining system stability and performance, as early detection of anomalies allows the orchestrator to take corrective actions, such as migrating workloads to different datacenters. This component 2.2 works in tandem with the traffic forecasting module 2.1 to effectively manage predictable workloads while detecting and responding to anomalies in unpredictable ones.

Anomalies are identified by comparing actual resource usage or incoming traffic against predictions made by the traffic forecaster. When the persistent forecast (a lightweight, periodic model) fails-indicated by a significant difference between the predicted and actual values-the anomaly detection module is activated. More specifically, to detect the anomalies, in some embodiments, statistical rules can be followed, where an anomaly (outlier in statistics) can be defined as any value that has a difference from the average value of the timeseries of more than three times the statistical deviation of the distribution.

This fallback mechanism can likewise employ more advanced anomaly forecasting techniques, such as Gaussian Mixture Models (GMM) or Boosted Trees, which are well-suited for identifying unusual patterns in data. These models run continuously or on-demand, depending on the system's configuration and performance requirements. These models allow the estimation of the severity of the anomaly and forecast its impact on resource utilization. The output includes an estimate of the resource usage during the anomalous state and the expected duration of the anomaly.

The traffic forecasting 2.1 and anomaly detection 2.2 components can operate as a unified module. During periods of normal and predictable workloads, the traffic forecaster 2.1 (persistent forecast) handles predictions and resource allocations efficiently. However, when anomalies are detected, the anomaly detection module 2.2 takes over, providing accurate insights into the system's state and guiding the orchestrator's response. Once the workload returns to predictable behavior, the traffic forecaster 2.1 reactivates, resuming its role in handling resource predictions.

In essence, the anomaly detection component 2.2 ensures resilience and adaptability in the orchestration process. By dynamically switching between traffic forecasting and anomaly detection modes, the system remains responsive to both expected and unexpected changes, minimizing disruption and maintaining application performance across the cloud-edge continuum.

### Scheduler (Component 3)

The scheduler component 3 serves as the decision-making core of the orchestrator, responsible for determining whether workloads should be migrated and, if so, selecting where to place them. Its optimization process balances several objectives, including resource utilization, carbon footprint reduction, latency minimization, cost efficiency, and anomaly management. By dynamically evaluating the trade-offs among these axes, the scheduler 3 ensures that applications operate sustainably and efficiently across the cloud-edge continuum.

In one embodiment, the scheduler 3 optimizes across the following key axes:
1. Resource Utilization: Efficient resource usage is a key priority, as maximizing utilization at each datacenter improves energy efficiency and avoids wasteful over-provisioning.
2. Carbon Efficiency: The scheduler prioritizes migrating workloads to nodes or datacenters with the lowest carbon intensity. This aligns with the primary sustainability goal of reducing the overall carbon footprint.
3. Latency: The scheduler minimizes latency by considering delays due to resource contention, as well as the time required to move workloads or boot applications at a remote datacenter. For user-facing services or tightly coupled microservices, low-latency communication is critical, and the scheduler ensures that migrations do not degrade performance.
4. Cost: The scheduler evaluates the financial trade-offs of running workloads on additional datacenters. It considers the cost of keeping resources active in remote locations and the deployment cost of booting applications if they are not already running at a specific site.
5. Anomaly management: The scheduler accounts for the duration of anomalies versus the time it takes to make migration decisions and execute them. If the anomaly is short-lived, the system penalizes unnecessary migrations to prevent wasted effort and instability.

Moreover, to evaluate potential migration destinations, the scheduler 3 uses a multi-objective weighted scoring function, particularly:${F}_{i} = {w}_{1} \cdot {R}_{i} + {w}_{2} \cdot {C}_{i} + {w}_{3} \cdot {L}_{i} + {w}_{4} \cdot {K}_{i} + {w}_{5} \cdot {A}_{i} ,$ where: Wᵢ: Weights assigned to each metric, reflecting their importance based on high-level constraints (e.g., service level objectives, application-specific priorities). Rᵢ: Idle resources at the datacenter/edge location *i.* Cᵢ: Carbon intensity of the datacenter/edge location *i.* Lᵢ: Latency, accounting for both contention and migration overhead, from the current location of the service/application to the datacenter/edge location *i.* Kᵢ: Cost of running the workload at the datacenter/edge location *i.* Aᵢ: Difference between anomality severity and migration time to datacenter/Edge location *i.*

In one embodiment, the scheduler 3 normalizes all metrics to a [0,1] value range using Min-Max normalization, or any other normalization function that ensures comparability despite differences in scale or units. It then calculates Fᵢ for each workload and location and selects the one with the lowest score for the migration.

In one embodiment, the scheduler 3 operates in real-time, with a focus on rapid decision-making to handle dynamic conditions, such as sudden traffic surges or resource contention. Rather than relying on complex optimization methods like Integer Linear Programming, which may introduce delays, it employs a greedy heuristic approach. This ensures that decisions are made within a fraction of the anomaly duration, minimizing disruptions to the system.

The scheduler 3 can consider the following practical constraints:
- Application booting time: If the application is not already running at the potential destination, the scheduler 3 accounts for the time and cost of deploying it. This creates a trade-off between leveraging idle resources and avoiding unnecessary deployment overhead.
- Localized decisions: The scheduler 3 maximizes resource utilization within datacenters where the application is already active, only migrating workloads when the benefits outweigh the costs.
- Sustainability first: Carbon reduction is prioritized, but only when performance degradation (e.g., due to latency) can be avoided for performance-critical applications.

The output of the scheduler 3 is a real-time decision on whether to migrate workloads experiencing anomalies and, if so, which datacenter will host the workload. This process ensures an optimal balance across sustainability, performance, and cost objectives, enabling the orchestrator to manage workloads effectively in a dynamic, distributed cloud-edge environment.

To demonstrate the decision-making process of the proposed framework, a microservice application that implements a social network where users can follow and message each other, upload posts and comment on each other's posts is considered. This application is assumed to use up to 8 GB of memory and 2 CPU cores. The objective is to determine where workload A, which is originally scheduled to run in Spain, should execute. This workload is generated by a recommendation algorithm that suggests posts to appear in the user's timeline.
- If this workload runs in a medium-sized datacenter in Spain, it will use up to 22% of the CPU capacity of that datacenter. At the time of execution, central Spain has a carbon intensity of 175 gCO₂eq/kWh. The maximum latency for processing the workload's requests in this datacenter is 9.37 seconds. To estimate the cost of renting resources in Spain, the AWS On-Demand Pricing is used, which indicates a cost of 0.0912$ per hour for hosting the application. This workload will saturate the CPU of this datacenter for two minutes.
- If this workload runs in a larger-sized datacenter in Sweden, it will utilize 10% of the CPU capacity of that datacenter. During execution, Sweden has a carbon intensity of 22 gCO₂eq/kWh. The maximum latency for handling requests in this datacenter is 672.26 milliseconds, which is significantly lower than the latency in Spain, due to the larger size of the Swedish datacenter and the absence of resource contention. According to AWS on-demand pricing, the cost of hosting this application in Sweden is 0.0864$ per hour. This workload does not create any resource utilization anomalies in this datacenter, due to its larger availability of resources.

Since this is a recommendation algorithm, it can run periodically in the background and does not have strict performance requirements. This flexibility allows carbon efficiency to be prioritized, giving a greater weight to this metric in the decision-making process. Based on the results of the decision-making algorithm, as described above, this workload is determined to be best executed in Sweden.

In the following, some example values for the minimum and maximum values and the weights for the normalization of the weighted scoring function Fᵢ = w₁ · Rᵢ + w₂ · Cᵢ + w₃ · Lᵢ + w₄ · Kᵢ + w₅ · Aᵢ, for the multi-objective optimization, are provided.
1. Idle Resources (Rᵢ)
   a. 0 % (fully utilized)
   b. 100 % (fully idle)
2. Carbon Intensity (Cᵢ)
   a. 12 gCO2eq/kWh (very green energy)
   b. 945 gCO2eq/kWh (high carbon intensity)
3. End-to-end Latency (Lᵢ)
   a. 1 ms (very fast)
   b. 30 s (slow execution)
4. Cost of running per hour (Kᵢ)
   a. $0.0864/hour (low cost of resources)
   b. $0.1056/hour (costly renting of resources)
5. Anomaly Severity vs Migration Time (Aᵢ)
   a. Anomaly Severity (AS): a score from 0 to 1, where 1 indicates critical impact.
   b. Migration Time (MT): normalized time for the migration (e.g., 0.1 = very fast, 1 = very slow).
   c. Ai = MT - AS (a high score reflects lower severity and slower migration).
6. Metric Weights (Wᵢ)
   a. w₁ = 0.2, w₂ = 0.3, w₃ = 0.2, w₄ = 0.1, w₅ = 0.2

While the primary intent of the present invention is carbon and resource-aware orchestration across the cloud-edge continuum, the framework is equally suitable for workloads and applications that operate solely within centralized or distributed cloud environments. In such scenarios, the orchestration framework leverages its carbon awareness and resource optimization capabilities to dynamically manage and allocate resources within cloud data centers. This ensures sustainability and efficiency for workloads that do not extend to edge infrastructure.

The present invention can also be adapted to operate exclusively within edge environments. For applications that are constrained to the edge due to low-latency requirements, privacy considerations, or limited connectivity, the framework can optimize resource allocation, energy efficiency, and carbon footprint across decentralized edge nodes. By tailoring its operations to edge-centric architectures, the framework provides significant value in ensuring both sustainability and performance in these scenarios.

Moreover, the framework is designed to be compatible with a broad spectrum of providers:
- Cloud Providers: The framework supports all major cloud service providers, whether they operate centralized or decentralized data center (DC) architectures. Its carbon-awareness mechanisms can integrate seamlessly into cloud infrastructures to optimize workload placement based on real-time energy usage and carbon intensity data.
- loT Providers with Proprietary Energy Sources: For IoT providers utilizing their own renewable or non-renewable energy sources, the framework can incorporate data from these energy sources into its decision-making processes. This allows the orchestration of workloads to be aligned with the availability of renewable energy, maximizing sustainability.
- Decentralized Providers: The invention is also compatible with decentralized providers such as Akamai and similar Content Delivery Networks (CDNs) that rely on globally distributed infrastructure. By leveraging its resource- and carbon-aware orchestration capabilities, the framework can optimize task distribution and execution across these decentralized nodes, ensuring minimal energy consumption and carbon emissions.

An additional feature of the present invention is its potential integration with predictive models for carbon awareness. By using historical carbon intensity data and energy consumption patterns, the framework can forecast future carbon footprints and proactively adjust workload placements to reduce emissions. This predictive capability adds a layer of intelligence to the framework, enhancing its environmental impact.

For IoT providers and applications, the framework can be also extended to optimize energy consumption at a device level. By orchestrating tasks in alignment with device energy profiles, battery levels, and connectivity conditions, the framework ensures efficient utilization of edge resources while minimizing energy waste.

The framework can be designed to support customizable policies that can be tailored to specific use cases and application priorities. For instance, policies can be defined to prioritize low-latency execution, energy cost reduction, or carbon footprint minimization, depending on the needs of the application or provider.

In some embodiments, the present invention can dynamically adapt its microservice topology mapping for highly elastic applications (e.g., when autoscaling mechanisms are dominant). For example, in a large-scale e-commerce platform, where microservices like recommendation engines and payment gateways continuously scale up or down based on demand, component 1.1 can ensure that interactions between scaled instances are optimized for low latency and minimal resource contention. This allows for efficient microservice communication and resource utilization even in rapidly changing environments.

Component 1.1 can also be used for mapping dependencies across heterogeneous environments where applications operate in mixed hardware and software ecosystems. For instance, in a media delivery system with both containerized microservices and legacy monolithic systems, the present invention can map interactions between modern and legacy components, enabling smooth orchestration and migration planning.

For privacy-sensitive applications (e.g., healthcare or financial services), the dependency mapping can minimize data movement and, thus, data exposure across regions and microservices. For example, patient data processed across different healthcare microservices can have their dependencies optimized to ensure that sensitive information remains localized within specific regulatory boundaries (e.g., GDPR-compliant zones).

In some embodiments, component 1.2 can be adapted to proactively handle highly dynamic workloads, such as gaming platforms or live-streaming services. By analyzing historical and real-time traffic data along with relevant application metadata, the present invention can estimate short-lived spikes in resource requirements and adjust resource provisioning accordingly. For instance, during a popular game release, the system would map sudden increases in user traffic to compute and storage resources, ensuring uninterrupted performance.

Moreover, this step can allow customized traffic-to-resource translation based on application-specific requirements. For example, a machine learning inference service might map incoming traffic not only to CPU or memory needs but also to GPU utilization for inference acceleration. This ensures the present invention accounts for specialized hardware requirements in resource provisioning.

Component 2.1 can be adapted to applications with multi-tier architectures, where traffic patterns at one tier (e.g., frontend services) impact downstream tiers (e.g., database services). For instance, in an online marketplace, an increase in user searches could lead to a corresponding surge in database queries. The forecasting model could predict traffic at each tier, ensuring resources are allocated preemptively across the entire stack.

The framework can also incorporate external events (e.g., promotional campaigns or news events) into traffic forecasting. For instance, during a televised sports event, a streaming platform could forecast traffic spikes based on viewership predictions. Additionally, the forecaster 2.1 can predict the impact of increased traffic (e.g., sudden surges due to a viral event) on resource demand, allowing for proactive resource allocation.

The anomaly detection component 2.2 can be extended to detect issues across multiple dimensions, such as CPU, memory, and I/O usage, simultaneously. For example, in a cloud-native application, anomalies caused by a memory leak might correlate with increased I/O latency. The present invention would detect and address such multidimensional anomalies to prevent cascading failures.

For applications with unpredictable workloads, such as news platforms or social media during breaking events, the anomaly detection system 2.2 can dynamically adjust thresholds based on real-time data. For instance, the present invention could detect anomalies in traffic patterns caused by viral posts and trigger proactive measures to allocate resources.

The scheduler 3 can likewise be adapted for workloads that are distributed across multiple cloud providers. For example, a global content delivery network might use the scheduler 3 to evaluate whether migrating workloads between AWS, Azure, and Google Cloud regions can reduce costs while maintaining latency requirements.

In edge-only deployments, the scheduler 3 can evaluate resource availability across highly distributed edge nodes to ensure efficient workload placement. For instance, in an loT-based traffic management system, the scheduler 3 could dynamically reassign tasks (e.g., video processing) to nearby edge nodes to minimize latency and avoid resource contention.

Various aspects of the proposed method, as described herein, may be embodied in programming. Program aspects of the technology may be thought of as "products" or "articles of manufacture" typically in the form of executable code and/or associated data that is carried on or embodied in a type of machine readable medium. Tangible non-transitory "storage" type media include any or all of the memory or other storage for the computers, processors, or the like, or associated modules thereof, such as various semiconductor memories, tape drives, disk drives and the like, which may provide storage at any time for the software programming.

All or portions of the software may at times be communicated through a network such as the Internet or various other telecommunication networks. Such communications, for example, may enable loading of the software from one computer or processor into another, for example, from a management server or host computer of a scheduling system into the hardware platform(s) of a computing environment or other system implementing a computing environment or similar functionalities in connection with image processing. Thus, another type of media that may bear the software elements includes optical, electrical and electromagnetic waves, such as used across physical interfaces between local devices, through wired and optical landline networks and over various air-links. The physical elements that carry such waves, such as wired or wireless links, optical links or the like, also may be considered as media bearing the software. As used herein, unless restricted to tangible "storage" media, terms such as computer or machine "readable medium" refer to any medium that participates in providing instructions to a processor for execution.

A machine-readable medium may take many forms, including but not limited to, a tangible storage medium, a carrier wave medium or physical transmission medium. Nonvolatile storage media include, for example, optical or magnetic disks, such as any of the storage devices in any computer(s), or the like, which may be used to implement the system or any of its components shown in the drawings. Volatile storage media may include dynamic memory, such as a main memory of such a computer platform. Tangible transmission media may include coaxial cables; copper wire and fiber optics, including the wires that form a bus within a computer system. Carrier-wave transmission media may take the form of electric or electromagnetic signals, or acoustic or light waves such as those generated during radio frequency (RF) and infrared (IR) data communications. Common forms of computer-readable media may include, for example: a floppy disk, a flexible disk, hard disk, magnetic tape, any other magnetic medium, a CD-ROM, DVD or DVD-ROM, any other optical medium, punch cards paper tape, any other physical storage medium with patterns of holes, a RAM, a PROM and EPROM, a FLASH-EPROM, any other memory chip or cartridge, a carrier wave transporting data or instructions, cables or links transporting such a carrier wave, or any other medium from which a computer may read programming code and/or data. Many of these forms of computer readable media may be involved in carrying one or more sequences of one or more instructions to a physical processor for execution.

Those skilled in the art will recognize that the present teachings are amenable to a variety of modifications and/or enhancements. For example, although the implementation of various components described herein may be embodied in a hardware device, it may also be implemented as a software only solution-e.g., an installation on an existing server. In addition, image processing as disclosed herein may be implemented as a firmware, firmware/software combination, firmware/hardware combination, or a hardware/firmware/software combination.

The present disclosure and/or some other examples have been described in the above. According to descriptions above, various alterations may be achieved. The topic of the present disclosure may be achieved in various forms and embodiments, and the present disclosure may be further used in a variety of application programs. All applications, modifications and alterations required to be protected in the claims may be within the protection scope of the present disclosure.

The scope of the present invention is defined in the following set of claims.

## Claims

1. A method for workload management across cloud and edge computing environments, the latter including centralized or distributed computing environments with a plurality of datacenters and/or edge centers, the method comprising performing the following steps by an orchestrator:
a) performing a microservice topology mapping and application-specific microservice dependencies profiling by analyzing how different microservices hosted on the datacenters and/or edge centers interact and depend on each other;
b) profiling and translating datacenter's and/or edge center's incoming application traffic data into resource utilization at both a microservice node level and a cluster node level;
c) estimating future incoming application traffic data patterns of the datacenters and/or edge centers by implementing at least one predictive model on historical resource usage data of the datacenters and/or edge centers;
d) detecting anomalies in resource utilization or workload performance in the datacenters and/or edge centers by comparing a current resource usage or incoming application traffic data against the estimated future incoming application traffic data patterns; and
e) determining whether a workload should be migrated to another datacenter and/or edge center by performing a multi-objective customizable optimization process comprising executing a weighted scoring function on different metrics including the resource utilization, a carbon footprint reduction, a latency minimization, a cost efficiency and an anomaly management accounting for a duration of anomalies versus a time it takes to make migration decisions and execute them.

2. The method of claim 1, wherein the weighted scoring function comprises:
normalizing all the different metrics to a [0,1] value range using a normalization function;
calculating the scoring function for each of the datacenters and/or edge centers; and
executing a decision criteria using the calculated scoring functions.

3. The method of claim 2, wherein the decision criteria comprises selecting the datacenter or edge center with a lowest scoring function for the migration.

4. The method of any one of the previous claim, wherein step a) comprises constructing a directed acyclic graph representing the interactions between the microservices, wherein each node in the constructed graph corresponds to a microservice and edges represent communication dependencies and frequency between them.

5. The method of any one of the previous claims, wherein the predictive model comprises a naive baseline model.

6. The method of claim 5, wherein the naive baseline model is tuned to at least one of: a periodicity of the incoming application traffic data or to different applications and datacenters/edge centers that exhibit different periodic behaviors.

7. The method of any one of the previous claims, wherein in step d) the anomalies are detected using statistical rules.

8. The method of any one of the previous claims, wherein in step d) the anomalies are detected using at least one of a Gaussian Mixture Model or a Boosted Tree.

9. The method of any one of the previous claims, wherein step e) is performed in real-time.

10. The method of claim 9, wherein the determining step further comprises using a greedy heuristic approach.

11. The method of any one of the previous claims, wherein step b) further comprises using a machine learning inference service that maps the datacenter's and/or edge center's incoming application traffic data to CPU, memory and GPU needs.

12. The method of any one of the previous claims, wherein step c) further comprises using external events including promotional campaigns and/or news events to estimate the future incoming application traffic data patterns.

13. An orchestrator for workload management across cloud and edge computing environments, the latter including centralized or distributed computing environments with a plurality of datacenters and/or edge centers, the orchestrator comprising:
a memory; and
one or more processors, the one or more processors being configured to:
perform a microservice topology mapping and application-specific microservice dependencies profiling by analyzing how different microservices hosted on the datacenters and/or edge centers interact and depend on each other;
profile and translate datacenter's and/or edge center's incoming application traffic data into resource utilization at both a microservice node level and a cluster node level;
estimate future incoming application traffic data patterns of the datacenters and/or edge centers by implementing at least one predictive model on historical resource usage data of the datacenters and/or edge centers;
detect anomalies in resource utilization or workload performance in the datacenters and/or edge centers by comparing a current resource usage or incoming application traffic data against the estimated future incoming application traffic data patterns; and
determine whether a workload should be migrated to another datacenter and/or edge center by performing a multi-objective customizable optimization process comprising executing a weighted scoring function on different metrics including the resource utilization, a carbon footprint reduction, a latency minimization, a cost efficiency and an anomaly management accounting for a duration of anomalies versus a time it takes to make migration decisions and execute them.

14. A non-transitory computer readable medium comprising code instructions that when executed by a computing element implement the method of any of claims 1 to 12.
